# EUROPÄISCHE PATENTSCHRIFT

(11) **EP 1 457 358 B1**
(45) Veröffentlichungstag und Bekanntmachung des Hinweises auf die Patenterteilung: **27.04.2005**
(21) Anmeldenummer: 03025286.0
(22) Anmeldetag: 06.11.2003
(51) Int. Cl.: B60B 3/06, B22D 19/00

(54) **Gusskörper, insbesondere Buntmetallkörper mit einem verbleibenden Kern und Vorrichtung zur Herstellung dessen Kern**
Cast article with permanent core and process for manufacture of said core
Pièce coulée autour d'un noyau permanent et procédé de fabrication dudit noyau

(30) Priorität: 08.03.2003 DE 10310211
(43) Veröffentlichungstag der Anmeldung: 15.09.2004
(73) Patentinhaber: Hoffmann Wärmetechnik GmbH, 58791 Werdohl (DE)
(72) Erfinder: Hoffmann, Kai, 58840 Plattenberg (DE)
(74) Vertreter: Wolf, Günter, Dipl.-Ing.

(56) Entgegenhaltungen:
- WO-A-00/76785
- WO-A-02/28669
- WO-A-99/39923
- DE-U- 20 111 293
- DE-U- 29 724 288

## Beschreibung

Die Erfindung betrifft einen Gußkörper, insbesondere Buntmetall-Gußkörper mit einem eingebundenen, verlorenen bzw. im Gußkörper verbleibenden Kern, der in Bezug auf das Gießmaterial ein geringeres spez. Gewicht aufweist.
Die Erfindung bezieht sich ferner auf eine Vorrichtung zu dessen Kernherstellung.

Derartige Gußkörper sind bspw. nach der AT-A-406 134 bekannt, und zwar speziell bezogen auf Fahrzeug-Rad-Gußfelgen, die entwickelt worden sind, um bei gewährleisteter hoher Festigkeit des Gußkörpers gleichzeitig der Forderung nach möglichst geringem Gewicht zu genügen, und zwar um auch mit solchen Fahrzeugelemeten dem allgemeinen Bestreben zu folgen, Fahrzeuge so leicht wie möglich zu bauen. Abgesehen von der bei diesem Bemühen nahezu selbstverständlichen Maßgabe, den bzw. die einzubindenden und im fertigen Gußkörper verbleibenden Kerne in Bezug auf den eigentlichen Gußkörpers leichter zu halten, ist in der genannten AT-A-406 134 für die den Kern bilden sollenden Formkörper lediglich offenbart, dafür Metallschaum, insbesondere Aluschaum zu verwenden oder für die Kerne Wabenkörper aus bspw. Stahllamellen zu verwenden.
Mit der Belassung leichter Kerne als verlorene Kerne im Gußkörper wurde im übrigen die übliche Methode verlassen, die Gußkörper zwecks Gewichtsreduzierung und Materialersparnis als Hohlkörper auszubilden, da hierbei aufwendig mit nach dem Guß wieder zu entfernenden Sandkernen gearbeitet werden muß, was wiederum verlangte, am Gußkörper für die Kernentfernung eine oder mehrere entsprechend große Öffnungen zu belassen, die aber Auswirkungen auf den Kraftlinienfluß im fertigen und belasteten Gußkörper haben.

Ausgegangen ist bei einer Ausbildung mit verlorenen Kernen gemäß der vorgenannten AT-A-406 134 offenbar vom Vorbild natürlicher "Leichtbau-Knochenstrukturen". Da bzgl. der eigentlichen Gestaltung sogenannter Wabenkörper aus Stahllamellen ebenfalls nichts Genaues in der AT-A-406 134 ausgesagt ist und diese absehbar nur mit einem nicht unbeträchlichen Aufwand herstellbar sind, muß diesbezgl. dahingestellt bleiben, inwieweit bei Ker-Kernen aus einer wabenartiger Stahllamellen-Struktur tatsächlich eine Gewichtsreduzierung bei insbesondere kompakten Gußkörpern, wie sie nun einmal Felgen darstellen, erreichbar ist. Eher vorstellbar ist dabei die Ausbildung solcher verlorener Kerne aus dem in der AT-A-406 134 in Betracht gezogenen Metallschaum, insbesondere Alu-Metallschaum, wobei vorausgesetzt ist, daß solche Kerne aufgrund ihrer Oxidschicht beim Gießvorgang der hohen Temperatur des Gußmaterials widerstehen. Es hat sich jedoch gezeigt, daß es in der Grenzschicht zwischen solchen metallischen Kernen und dem zugegossenen Material zu zumindest lokalen Anschmelzungen kommt, und außerdem kommt es aufgrund der guten Wärmeleitfähigkeit zu sofortigem Wärmeabfluß in den Kern bzw. die Kerne, was zumindest lokal ebenfalls zu nicht homogenen Erstarrungsstrukturen im Gußkörper führt. Sofern es sich dabei, wie beim Gegenstand der AT-A-406 134, um Felgen handelt, kann dies nicht ohne weiteres beherrschbare bzw. nur mit beträchtlichen Aufwand auszugleichende Unwuchten zur Folge haben. Außerdem führen solche lokalen Anschmelzungen in den Grenzschichtbereichen zu lokalen Wandstärkenverdickungen und damit zu Veränderungen des Kraftlinienflusses im Gußkörper, die nicht ohne Auswirkung auf die Festigkeit und exakte Berechenbarkeit solcher Gußkörper bleiben, und ferner ist zu berücksichtigen, daß von nicht angeschmolzenen, in den Leichtmetallguß unverändert eingebundenen, teilweise auch scharfkantigen Metallschaumlamellen Gußkörperrisse ihren Ausgang nehmen können.

Der Erfindung liegt demgemäß, und zwar ausgehend von einem Gußkörper der eingangs genannten Art und insoweit über die spezielle Beschränkung auf Felgen gemäß der AT-A-406 134 hinaufgehend, die Aufgabe zugrunde, ein Kernmaterial für solche Gußkörper vorzuschlagen, das mindestens ebenso leicht ist wie Metallschaum, das sich problemlos in gewünschte Formen bringen läßt, eine schlechte Wärmeleitfähigkeit und, in Form gebracht, eine weitestgehend glatte Oberfläche aufweist und das bei in Bezug auf das Gießmaterial geringerer Schwindung ohne Anschmelzgefahr den hohen Temperaturen des Gießmaterials aussetzbar ist. Aufgabe ist auch die Schaffung einer für die Herstellung derartiger Kerne geeignete Vorrichtung.

Diese Aufgabe ist mit einem Gußkörper der eingangs genanten Art nach der Erfindung dadurch gelöst, daß der Kern aus,mindestens mit anorganischem Bindemittel versetztem, im geblähten Zustand in Kernform verpreßtem Vermiculite gebildet ist, wobei der glatte Oberflächenanteil um ein Vielfaches größer ist als die Fläche von Oberflächenporen.

Mit diesem erfindungsgemäßen, speziellen und durch Pressen in Form gebrachten Material sind die gestellten Forderungen erfüllt, wobei es sich nicht nur in Bezug auf Metallschaum um den einfachen Ersatz dieses Materials durch ein anderes, natürlich vorkommendes, mineralisches Material handelt, sondern um ein für den vorliegenden speziellen Zweck entsprechend behandeltes Material, d.h., um thermisch vorgeblähtes Material und, was insbesondere für den vorgesehenen Verwendungszweck wichtig ist, soweit in Form verpreßtes Schüttmaterial, daß bei dadurch bedingter, unvermeidbarer Porenbildung der glatte Oberflächenanteil um ein Vielfaches größer ist als die Öffnungsfläche aller sich am gepreßten Kern einstellenden Poren. Wenn man so will, handelt es sich bei der erfindungsgemäßen Wahl von Vermiculite für Metallgußkörperkerne gewissermaßen um eine Zweckentfremdung, denn Vermiculite kommen, soweit bekannt, in geblähter Form und mit Bindemittel versetzt aufgrund ihres großen Hohlraumvolumens normalerweise ausschließlich für Isolationszwecke zur Anwendung.

Was dabei die Maßgabe betrifft, daß das Kernmaterial mindestens mit einem anorganischen Bindemittel versetzt sein soll, so sind darunter, was die Bindemittel betrifft, zum Einen die üblichen Bindemittel, nämlich Natron- oder Kaliwasserglas, Monoaluminiumphosphat oder auch Silika-Gel zu verstehen, und was das "mindestens" betrifft zum Anderen mögliche Zuschlagsstoffe zum vermiculite, nämlich bspw. Ton, Kaolin, Talkum, Perlite, keraamische Hohlkugeln aus Aluminiumoxid oder auch Siliziumoxid.

Die weitere Aufgabe der Schaffung einer für die Herstellung derartiger Kerne geeigneten Vorrichtung ist nach der Erfindung dadurch gelöst, daß diese aus zwei relativ zueinander unter Druck verstellbaren, der Kernform entsprechenden Negativ-Preßstempeln bzw. Formhälften gebildet ist, die mit ihren scharfkantigen, gegeneinander gerichteten Umfangskonturen innerhalb eines konturangepaßten Kernmaterial-Aufnahmeschachtes geführt sind, dessen Aufnahmevolumen einem Mehrfachen des Kernvolumens entspricht.

Wesentlich ist dabei insbesondere die Bemessung des Aufnahmeschachtvolumens, da dieses soviel an einer Vermiculite-Schüttung aufnehmen können muß, daß sich daraus in einem Vorgang ein derart verdichteter Kern pressen läßt, an dem die Bedingung erfüllt ist, daß der glatte Oberflächenanteil am Kern um ein Vielfaches größer ist als die Fläche von Oberflächenporen.
Die weitere Maßgabe der Scharfkantigkeit der Umfangskonturen der beiden Formhälften ist dabei Voraussetzung dafür, daß diese überhaupt bezogen auf das Endvolumen des Fertigkernes total mit ihren Umfangskonturen zusammengefahren werden können, d.h., ohne daß zwischen den Randbereichen der Formhälften ebenfalls Schüttgut zusammengepreßt werden kann.

Der erfindungsgemäße Gußkörper und die Vorrichtung zur Herstellung von in diesem einzubindenden verlorenen Kernen werden nachfolgend anhand der zeichnerischen Darstellung von Ausführungsbeispielen näher erläutert, und zwar unter zugrundelegung einer geometrisch einfach darstellbaren Form.

Es zeigt schematisch
- Fig.1: im Schnitt ein aus Leichtmetallguß bestehendes Konstruktionselement bspw. in Form einer Schwinge;
- Fig.2: einen Schnitt längs Linie II-II durch das Element gemäß Fig.1;
- Fig.3: in Alleinstellung und in Draufsicht den im Element gemäß der Fig.1,2 eingebundenen verlorenen Kern;
- Fig.4,5: Schnitte durch Kerne in besonderer Ausführungsform;
- Fig.6: einen Längsschnitt durch die Vorrichtung zur Herstellung von Kernen gemäß der Fig.3;
- Fig.6A: einen Schnitt durch die Vorrichtung längs Linie VI-VI in Fig.6;
- Fig.7: im Schnitt die Vorrichtung gemäß Fig.6 mit den in Endstellung zusammengefahrenen Preßstempeln;
- Fig.8: im Schnitt die Vorrichtung gemäß Fig.6 in entnahmebereiter Stellung für den Kern und
- Fig.9: im Schnitt die Formwerkzeuge zur Herstellung bspw. der Schalen gemäß Fig.4.

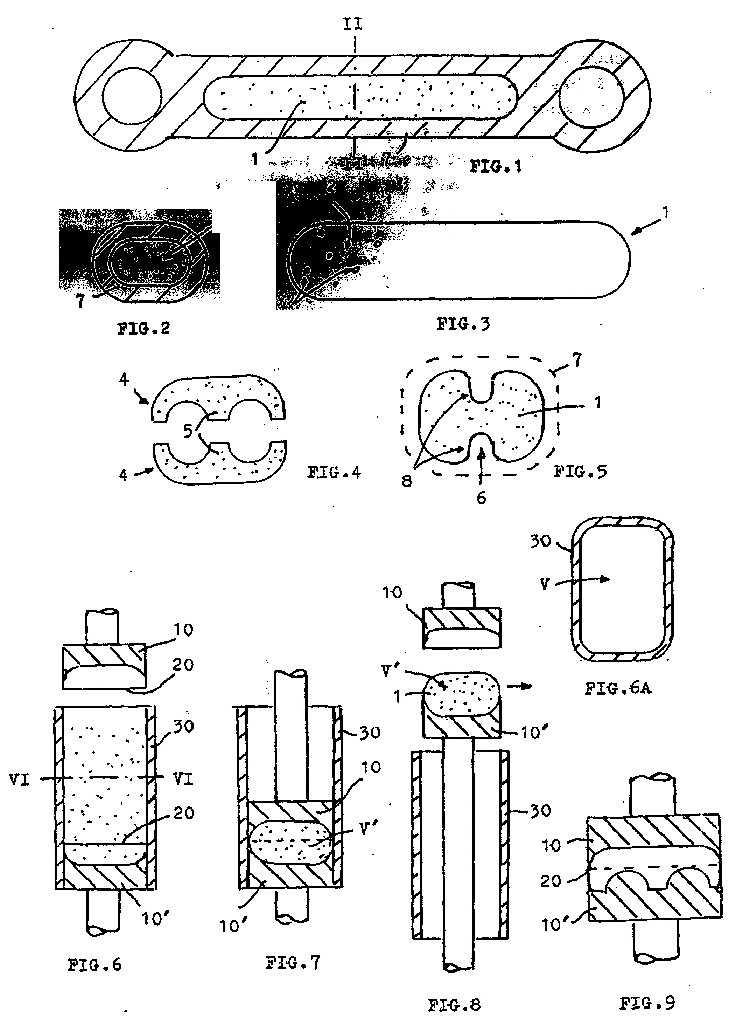

Beim der Fig.1 dargestellten Ausführungsform eines Alu-Gußkörpers handelt es sich bspw. um ein Gelenkglied mit einem per Guß eingebundenen verlorenen Kern 1, der in Bezug auf das Alu-Gießmaterial ein geringeres spez. Gewicht aufweist.

Der gepunktet dargestellte Kern 1 ist dabei erfindungsgemäß aus mindestens mit anorganischem Bindemittel versetztem, im geblähten Zustand in Kernform verpreßtem Vermiculite gebildet, wobei der glatte Oberflächenanteil 2 (siehe Fig.3) um ein Vielfaches größer ist als die Fläche von Oberflächenporen 3. Diese maximal nur etwa stecknadelkopfkleinen Poren ergeben sich beim Pressen des Kernes absolut unregelmäßig in der Oberfläche, die sich ansonsten aus sich dicht an dicht anschließenden, erkennbar bleibenden Vermiculite-Blättchen von etwa maximal 1mm² darstellt. Als Poren in der angegebenen Größenordnung sind dabei, und dies auch nur unregelmäßig, in etwa nur zwei bis zehn pro cm² erkennbar. Die ganze Oberfläche eines solchen Kernes ist dabei so weich, daß sie mit einem senkrecht angesetzten

Fingernagel etwas eindrückbar ist. Dies ergibt sich daraus, daß beim Pressen eines solchen Kernes, was noch näher erläutert wird, senkrecht zur Preßfläche stehende Vermiculiteblättchen verbiegen und leicht federnd wirken. Dieses minimale Federn hat, wie sich gezeigt hat, keinen nachteilige Auswirkung auf die zum Kern hin drängende bzw. schwindende Haut des Gießmaterials, sondern die insoweit etwas elastischen Oberfläche des Kernes schmiegt sich bleibend federnd an den Gußkörper an, und die daraus resultierende schwindungsdämpfende Eigenschaft des Kernes kommt der Statik des Gußkörpers bei Wechselbelastungen zugute.

Wenn dies die Größe des Kernes 1 zuläßt, so kann dieser auch als Hohlkörper aus mindestens zwei mit Bindemittel verklebten Schalenteilen 4 gebildet werden, wobei, wiederum größenabhängig, die Schalenteile 4 innen mit sich entsprechenden, im zusammengefügtem Zustand sich gegenseitig abstützenden Rippen 5 versehen sein können, wie dies in Fig.4 dargestellt ist. Außerdem ist es auch möglich, den Kern 1 zur Ausbildung von Innenrippen 6 am Gußkörpers 7 mit Eintiefungen 8 zu versehen (sieheFig.5).

Was nun die Herstellbarkeit solcher Kerne 1 betrifft, so ist dafür eine Vorrichtung nach der Erfindung dahingehend vorgesehen, daß diese aus zwei relativ zueinander unter Druck verstellbaren, der Kernform entsprechenden Negativ-Preßstempeln 10,10' gebildet ist, die mit ihren scharfkantigen, gegeneinander gerichteten Umfangskonturen 20 innerhalb eines konturangepaßten Kernmaterial-Aufnahmeschachtes 30 geführt sind, dessen Aufnahmevolumen V einem Mehrfachen des Kernvolumens V' entspricht.

Eine solche Vorrichtung ist unter Auslassung alles erforderlichen konstruktiven Beiwerkes schematisch in den Fig.6 bis 9 dargestellt. Unterschiedliche Kernformen verlangen dabei natürlich nicht nur jeweils entsprechend angepaßte Preßstempel 10,10' sondern auch Aufnahmeschächte 30, von denen ein Querschnittsbeispiel in Fig.6A dargestellt ist.

Volumen- oder gewichtsorientiert am konstruktiv vorgegebenen Kern 1 und erforderlicher Verdichtung ist eine entsprechende Schüttung von geblähten, mit Bindemittel und gegf. Zuschlägen versetzten Vermiculite-Partikeln in den Aufnahmeschacht 30 einzufüllen, in dem dann durch Zusammenfahren der Preßstempel 10,10' der Kern 1 entsteht (Fig.7), der dann bei Stellung des Stempels 10' gemäß Fig.8 entnommen und auf geeignete Weise getrocknet wird. Wesentlich ist dabei die scharfkantige Umfangskontur 20 beider Preßstempel 10,10'.
Bei möglicher schalenförmiger Ausbildung der Hälften eines daraus zusammensetzbaren Hohlkernes bspw. gemäß Fig.4 sind Preßstempel 10,10' gemäß Fig.9 erforderlich.

Die fertigen und getrockneten Kerne werden zweckmäßig vorgewärmt in die Gußkokille, wie üblich entsprechend abgestützt, eingebracht, um den Abschreckeffekt beim Eingießen des Gußmaterials zu reduzieren, und zwar insbesondere dann, wenn für den Gußkörper dünne Wandstärken vorgesehen sind.

## Patentansprüche

1. Gußkörper, insbesondere Buntmetall-Gußkörper mit einem eingebundenen verlorenen Kern, der in Bezug auf das Gießmaterial ein geringeres spez. Gewicht aufweist,
wobei
der Kern (1) aus mindestens mit anorganischem Bindemittel versetztem, im geblähten Zustand in Kernform verpreßtem Vermiculite gebildet ist, wobei der Kern derart verdichtet ist, dass der glatte Oberflächenanteil (2) um ein Vielfaches größer ist als die Fläche von Oberflächenporen(3).

2. Gußkörper nach Anspruch 1,
**dadurch gekennzeichnet,**
da**ß** der Kern (1) als Hohlkörper aus mindestens zwei mit Bindemittel verklebten Schalenteilen (4) gebildet ist.

3. Gußkörper nach Anspruch 2,
**dadurch gekennzeichnet,**
**daß** die Schalenteile (4) innen mit sich entsprechenden, im zusammengefügtem Zustand sich gegenseitig abstützenden Rippen (5) versehen sind.

4. Gußkörper nach einem der Ansprüche 1 bis 3,
**dadurch gekennzeichnet,**
**daß** der Kern (1) zur Ausbildung von Innenrippen (6) des Gußkörpers (7) mit Eintiefungen (8) versehen ist.

5. Vorrichtung zur Kernherstellung für Gußköper nach einem der Ansprüche 1 bis 4,
**dadurch gekennzeichnet,**
**daß** diese aus zwei relativ zueinander unter Druck verstellbaren, der Kernform entsprechenden Negativ-Preßstempeln (10, 10') gebildet ist, die mit ihren scharfkantigen, gegeneinander gerichteten Umfangskonturen (20) innerhalb eines konturangepaßten Kernmaterial-Aufnahmeschachtes (30) geführt sind, dessen Aufnahmevolumen (V) einem Mehrfachen des Kernvolumens (V') entspricht.

## Claims

1. A cast body, particularly a non-ferrous metal cast body having an included lost core that has a lower specific weight than the casting material,
wherein
the core (1) is constructed from vermiculite that is compressed into the shape of the core in the swelled state and to which is added at least one inorganic binder, wherein the core is compressed in such manner that the smooth surface portion (2) is many times greater than the area of the surface pores (3).

2. The cast body as cited in Claim 1,
**characterised in that**
the core (1) is constructed from ate least two shell parts (4) that have been bonded with a bonding substance.

3. The cast body as cited in Claim 2,
**characterised in that**
the shell parts (4) are provided internally with ribs (5) that mate with each other and support each other mutually when the shell is close.

4. The cast body as cited in any of Claims 1 to 3,
**characterised in that**
the core (1) is provided with recesses (8) for the formation of interior ribs (6) in the cast body (7).

5. A device for manufacturing cores for cast bodies as cited in any of Claims 1 to 4,
**characterised in that**
it is constructed from two negative pressing patterns (10, 10') corresponding to the shape of the core and displaceable relative to one another under pressure, which are moved towards each other with their sharp-edged, circumferential contours (20) facing each other inside a contour-adapted core material collection shaft (30), the capacity (V) of which is a multiple of the core volume (V').

## Revendications

1. Corps en fonte, notamment corps en fonte en métaux non ferreux, avec un noyau perdu incorporé, présentant un poids spécifique plus faible que celui du matériau de fonte,
le noyau (1) étant constitué de vermiculite mélangée à au moins un liant anorganique, pressée à l'état soufflé en forme de noyau, le noyau étant comprimé de façon telle, que la fraction de surface lisse (2) est supérieure d'un multiple à la surface des pores superficiels (3).

2. Corps en fonte selon la revendication 1,
**caractérisé en ce que**
le noyau (1) est conçu sous la forme d'un corps creux constitué d'au moins deux éléments de coque (4) collés à l'aide de liant.

3. Corps en fonte selon la revendication 2,
**caractérisé en ce que**
les éléments de coque (4) sont munis à l'intérieur de nervures (5) qui se correspondent et qui à l'état rapproché se soutiennent mutuellement.

4. Corps en fonte selon l'une quelconque des revendications 1 à 3,
**caractérisé en ce que**
le noyau (1) est muni de creux (8), pour créer des nervures internes (6) dans le corps en fonte (7).

5. Dispositif pour la fabrication d'un noyau dans des corps en fonte selon l'une quelconque des revendications 1 à 4,
**caractérisé en ce que**
ce dernier est constitué de deux pistons de presse négatifs (10, 10') réglables entre eux sous pression et correspondant à la forme du noyau, qui par leurs contours à arêtes vives (20), qui se font face sont guidés à l'intérieur d'une gaine de réception (30) du matériau constituant le noyau qui est adaptée aux contours et dont le volume de réception (V) correspond à un multiple du volume du noyau (V').
